# EUROPÄISCHE PATENTSCHRIFT

(11) **EP 1 691 086 B1**
(45) Veröffentlichungstag und Bekanntmachung des Hinweises auf die Patenterteilung: **29.10.2008**
(21) Anmeldenummer: 06000658.2
(22) Anmeldetag: 13.01.2006
(51) Int. Cl.: F16B 13/08, F16B 15/04, E04F 13/08

(54) **Dämmstoffhalter**
Insulating material fixing means
Fixation pour matériau isolant

(30) Priorität: 09.02.2005 DE 102005005810
(43) Veröffentlichungstag der Anmeldung: 16.08.2006
(73) Patentinhaber: fischerwerke GmbH & Co. KG, 72178 Waldachtal (DE)
(72) Erfinder: Renz, Jürgen, 72202 Nagold (DE); Nehl, Wolfgang, 72178 Waldachtal (DE)
(74) Vertreter: Suchy, Ulrich Johannes

(56) Entgegenhaltungen:
- FR-A- 592 497
- US-A- 2 919 621
- US-A- 3 133 378

## Beschreibung

Die Erfindung betrifft einen Dämmstoffhalter zum Anbringen von Dämmstoffplatten an einem tragenden Untergrund, mit einem die Dämmstoffplatte durchsetzenden Halterschaft und einem daran anschließenden Halterteller.

Dämmstoffhalter sind Befestigungselemente zum Befestigen von Dämmstoffplatten an einem tragenden Untergrund, vorzugsweise an Wänden oder Decken von Gebäuden. Dämmstoffplatten dienen dem Schutz von Gebäuden vor Wärmeverlusten und Schallbelästigungen und werden häufig an Gebäudeaußenseiten befestigt. An derartige Befestigungselemente für die Befestigung solcher Platten wird die Forderung gestellt, dass sie die Dämmstoffplatten sicher am Untergrund fixieren und dabei keine wärmeleitenden Brücken bilden, die die Wärme vom Untergrund an die Außenseiten der wärmeisolierenden Dämmstoffplatten transportieren. Bei der Isolierung von Gebäudeaußenwänden liegen die Halterteller der Befestigungselemente dicht unterhalb der Oberfläche einer Putzschicht. Dies gilt insbesondere für sogenannten Dispersionsputz, der nur eine geringe Schichtdicke aufweist. Handelsübliche Dämmstoffhalter zur Montage von Dämmstoffplatten haben den Nachteil, dass sie die Bildung von Wärmebrücken nicht vollständig verhindern können, was auch für Dübel mit Kunststoffumspritzung oder Köpfen aus Kunststoff gilt. Dies beruht hauptsächlich auf der Unterschiedlichkeit der Materialien, aus denen der Dämmstoff einerseits und der Dämmstoffhalter andererseits gefertigt sind. Diese Unterschiedlichkeit kann auch zu unerwünschten Dämmstoffhalter-Abzeichnungen unter der Putzschicht an den Außenwänden führen, insbesondere bei Einwirkung von Feuchtigkeit und von Nässe. Bei der Verwendung einfacherer Putzqualitäten tritt dieser Mangel besonders häufig in Erscheinung. Zur Erreichung einer besseren Wärmedämmung sowie zur Vermeidung von Dübelabzeichnungen in der Putzschicht ist es bekannt, handelsübliche Dämmstoffhalter in die Dämmstoffplatten versenkt zu montieren.

Aus der EP 0 086 452 ist ein Verfahren bekannt, bei dem gleichzeitig mit dem Bohren des Bohrlochs für den Dübel eine Vertiefung in die Dämmstoffplatte zur Aufnahme des Dübels erzeugt wird. In diesem Fall wird mittels eines Senkbohrers, der einen Fräskopf und einen scheibenförmigen Anschlag umfasst, beim Bohren des Bohrlochs im gleichen Arbeitsgang eine dem Durchmesser des Haltertellers entsprechende Vertiefung in die Dämmstoffplatte gefräst. Der Halterteller wird in die Vertiefung eingebracht und die Vertiefung nach der Montage des Dämmstoffhalters durch eine Dämmstoffscheibe abgedeckt, die die Vertiefung bis zur Oberfläche der Dämmstoffplatte ausfüllt. Eine derartige Versenkung des Haltertellers eines Dämmstoffhalters ist wesentlich kostspieliger als eine konventionelle Befestigung mit einem die Dämmstoffplatte übergreifenden Halterteller. Zur Durchführung des beschriebenen Verfahrens sind außerdem noch spezielle, ebenfalls kostenaufwendige Werkzeuge notwendig

Die Druckschrift US-A-3 133 378 zeigt einen Halter zum Anbringen von Gipskartonplatten an Unterkonstruktionen aus Holz, dessen Prinzip sich auf die Befestigung von Dämmstoffplatten übertragen lässt. Der Halter weist eine geschlitzte Hülse mit Abstützelementen und einer Öffnung für einen Nagel auf. An der in Einsteckrichtung vorderen Seite sind die Abstützelemente so geformt, dass sie sich beim Eintreiben des Halters in die Gipskartonplatte einschneiden, sich radial nach außen bewegen und die Platte halten. Nachteilig ist allerdings, dass die Haltestellung der Abstützelemente davon abhängt, wie tief der Nagel in die Gipskartonplatte eingeschlagen ist. Planmäßig ist der Nagel nach dem Setzvorgang mit der Außenfläche der Platte bündig. Bei einem zu tief eingeschlagenen Nagel liegen die Abstützelementen vollflächig an der Holzunterkonstruktion an, womit die Haltefunktion nicht mehr gewährleistet ist.
Der Erfindung liegt daher die Aufgabe zugrunde, einen leicht zu montierenden und kostengünstig herzustellenden Dämmstoffhalter vorzuschlagen, der in eine Dämmstoffplatte versenkbar ist und somit eine Wärmebrückenbildung weitgehendst verhindert und der mit möglichst wenig Arbeitsschritten montierbar ist.

Diese Aufgabe wird erfindungsgemäß durch einen Dämmstoffhalter mit den Merkmalen des Anspruchs 1 oder des Anspruchs 10 gelöst. Weitere vorteilhafte Ausgestaltungen sind den Unteransprüchen zu entnehmen.

Der erfindungsgemäße Dämmstoffhalter dient zum Anbringen von Dämmstoffplatten an einem tragenden Untergrund, insbesondere an einer Wand oder Decke eines Gebäudes und ist in der Dämmstoffplatte versenkbar. Ein Halterteller des Dämmstoffhalters wird durch Abstützelemente gebildet, die mit einem hinteren Ende eines Halterschaftes des Dämmstoffhalters schwenkbar verbunden sind. Die Abstützelemente weisen an ihren Stirnflächen Schneidvorrichtungen zum Einschneiden der Dämmstoffplatte beim Einbringen des Haltertellers in die Dämmstoffplatte auf. Die Abstützelemente des Haltertellers sind am hinteren Ende des Halterschaftes radial angeordnet und mit einem schaftnahen Ende mit dem Halterschaft des Dämmstoffhalters verbunden. Die Abstützelemente des Dämmstoffhalters sind vorzugsweise symmetrisch um das hintere Ende des Halterschaftes verteilt angeordnet. Ein freies Ende der Abstützelemente ist gegen den Halterschaft des Dämmstoffhalters und in umgekehrter Richtung verschwenkbar. Die Abstützelemente können einstückig mit dem Halterschaft hergestellt oder als separates Teil am Halterschaft montiert sein. Die Abstützelemente können biegestarr oder biegeelastisch ausgeführt sein. Bei einer biegestarren Ausführung ist vorgesehen, die Abstützelemente um eine Schwenkachse eines Schwenklagers oder um eine Knickachse eines Filmscharniers zu verschwenken. Bei einer biegeelastischen Ausführung der Abstützelemente können die schaftnahen Enden der Abstützelemente starr mit dem hinteren Ende des Halterschaftes verbunden sein, wobei das Verschwenken der Abstützlemente in Richtung des Halterschaftes und umgekehrt durch Verformen der Abstützelemente erfolgt. Die Schneidvorrichtungen der Abstützelemente sind an den Stirnflächen der Abstützelemente vorgesehen. Sie können als Schneiden oder Spitzen ausgebildet sein. Die Schneidvorrichtungen sind so scharf, dass sie sich beim Einziehen oder Einschlagen des Dämmstoffhalters in den Dämmstoff der Dämmstoffplatte einschneiden. Beim Eindringen des Dämmstoffhalters in die Dämmstoffplatte wird der Halterteller ganz oder zu großen Teilen im Dämmstoff der Dämmstoffplatte versenkt, wobei sich die freien Enden der Abstützelemente immer tiefer in die Dämmstoffplatte einschneiden. Erfindungsgemäß greift das dem Halterteller gegenüberliegende Ende des Halterschaftes in einen Dübelschaft eines Dübels ein und/oder der Dämmstoffhalter weist Sicherungselemente für den Halterteller auf. Durch das Eingreifen des Halterschaftes in einen Dübelschaft kann das System so gestaltet sein, dass der Setzvorgang in einer vorgegebenen Position beendet wird, beispielsweise durch ein Widerlager am Dämmstoffhalter (s.u.). Die Sicherungselemente legen die Hatterstellung der Abstützelemente fest und verhindern ein Verschwenken der Abstützelemente über die Haltestellung hinaus. Die Sicherungselemente sind so ausgeführt und/oder angeordnet, dass die freien Enden der Abstützelemente immer in Richtung des Untergrunds weisen und somit als Widerhaken für die Dämmstoffplatte wirken. Die Sicherungselemente können durch Anschläge am hinteren Ende des Halterschaftes und/oder durch Halteelemente zwischen dem Halterschaft und den Abstützelementen gebildet sein. Hierdurch wird der Eintreibvorgang und/oder das Verschwenken der Abstützelemente begrenzt, was eine leichte und sichere Montage ermöglicht.

Vorteilhafterweise weist der Dämmstoffhalter Spreizelemente zur Zwangsspreizung des Haltertellers beim Einbringen des Haltertellers in die Dämmstoffplatte auf. Zweckmäßigerweise sind die Spreizelemente an den freien Enden der Abstützelemente vorgesehen und an den zum Halterschaft weisenden Auflageflächen des Haltertellers angeordnet. Die Spreizelemente stützen sich beim Eindringen des Dämmstoffhalters in die Dämmstoffplatte gegen die Dämmstoffplatte ab und verschwenken die Abstützelemente vom Halterschaft weg.

Eine vorteilhafte Ausgestaltung des Dämmstoffhalters sieht vor, dass die Abstützelemente des Haltertellers aus einer Montagestellung in eine Haltestellung verschwenkbar sind. In der Montagestellung weisen die Abstützelemente in Richtung eines vorderen Endes des Halterschaftes, so dass die Schneidvorrichungen der Abstützelemente des Haltertellers die Oberfläche der Dämmstoffplatte beim Einbringen des Dämmstoffhalters in die Dämmstoffplatte leicht einschneiden können. Nach dem Durchdringen der Oberfläche der Dämmstoffplatte stützen sich die Spreizelemente der Abstützelemente auf Schnittflächen der Dämmstoffplatte ab und verschwenken die Abstützelemente vom Halterschaft weg in die Haltestellung, bis die Abstützelemente in der Haltestellung seitlich vom Halterschaft abstehen. Die seitlich abstehenden Abstützelemente bilden in der Haltestellung den Halteteller des Dämmstoffhalters. Die Abstützelemente des Dämmstoffhalters werden beim Eindringen des Dämmstoffhalters in die Dämmstoffplatte durch die Spreizelemente zwangsgespreizt.

In einer bevorzugten Ausgestaltung greifen die Abstützelemente in der Haltestellung zumindest teilweise in einen inneren Bereich einer Dämmstoffplatte ein. Beim Eindringen des Dämmstoffhalters in die Dämmstoffplatte schneiden die Schneidvorrichtungen der Abstützelemente die Dämmstoffplatte ein und dringen in den inneren Bereich der Dämmstoffplatte ein. Die Abstützelemente werden dabei vom Dämmstoff der Dämmstoffplatte ganz oder teilweise umhüllt und sind formschlüssig mit der Dämmstoffplatte verbunden. Der Halterteller des Dämmstoffhalters übergreift einen inneren Bereich der Dämmstoffplatte zumindest teilweise.

Eine weitere vorteilhafte Ausführungsform sieht vor, dass die Spreizelemente von zur Mittelachse des Halterschaftes schräg nach außen geneigten Anlageflächen der Abstützelemente gebildet werden, die beim Eindringen des Haltertellers in eine Dämmstoffplatte ein nach außen gerichtetes Moment auf die Abstützelemente bewirken und dadurch die Abstützelemente von der Montagestellung in die Haltestellung verschwenken. Die Anlageflächen der Spreizelemente stützen sich während des Verschwenkens der Abstützelemente im Dämmstoff der Dämmstoffplatte ab.

In einer weiteren bevorzugten Ausführungsform weist der Dämmstoffhalter schräg nach außen geneigte Gleitflächen für die Anlageflächen der Spreizelemente der Abstützelemente auf, die beim Eindringen des Haltertellers in eine Dämmstoffplatte ein nach außen gerichtetes Moment auf die Abstützelemente bewirken und dadurch die Abstützelemente von der Montagestellung in die Haltestellung verschwenken. Die Gleitflächen für die Spreizelemente können durch keilförmige, in Längsrichtung des Dämmstoffhalters verlaufende Stege gebildet werden, wobei die Gleitflächen des Dämmstoffhalters und die Anlageflächen der Spreizelemente einen in etwa ähnlichen Neigungswinkel aufweisen. Erfindungsgemäß sind bei einstückiger Ausführung des Dämmstoffhalters die Gleitflächen für die Spreizelemente am Halterschaft und/oder bei zweistückiger Ausführung an einem Dübel des Dämmstoffhalters angeformt. Die Anlageflächen der Abstützelemente liegen zumindest zu Beginn des Schwenkvorgangs der Abstützelemente an den Gleitflächen des Dämmstoffhalters an.

In einer weiteren vorteilhaften Ausführung ist der Dämmstoffhalter einstückig ausgeführt und weist eine Stauchzone zwischen den Abstützelementen und dem Halterschaft sowie ein Widerlager für den Untergrund auf. Das Verschwenken der Abstützelemente von der Montagestellung in die Haltestellung erfolgt durch Stauchen der Stauchzone des Dämmstoffhalters. Das Stauchen des Dämmstoffhalters erfolgt durch Schläge auf die nach außen weisende Stirnfläche des Halterschaftes des Dämmstoffhalters, bis die Stirnfläche des Halterschaftes mit der Dämmstoffplatte fluchtet.

Nachfolgend wird die Erfindung anhand dreier in der Zeichnung dargestellter Ausführungsbeispiele näher erläutert. Es zeigen:
- Figur 1: einen Achsschnitt eines erfindungsgemäßen Dämmstoffhalters in einer Montagestellung beim Einbringen in eine Dämmstoffplatte;
- Figur 2: eine Schnittdarstellung des Dämmstoffhalters gemäß Figur 1 in einer Haltestellung nach dem Einbringen in die Dämmstoffplatte;
- Figur 3: einen Achsschnitt eines erfindungsgemäßen Dämmstoffhalters mit Stauchzone in einer Haltestellung nach dem Einbringen in die Dämmstoffplatte; und
- Figur 4: eine perspektivische Darstellung eines erfindungsgemäßen einstückigen Dämmstoffhalters.

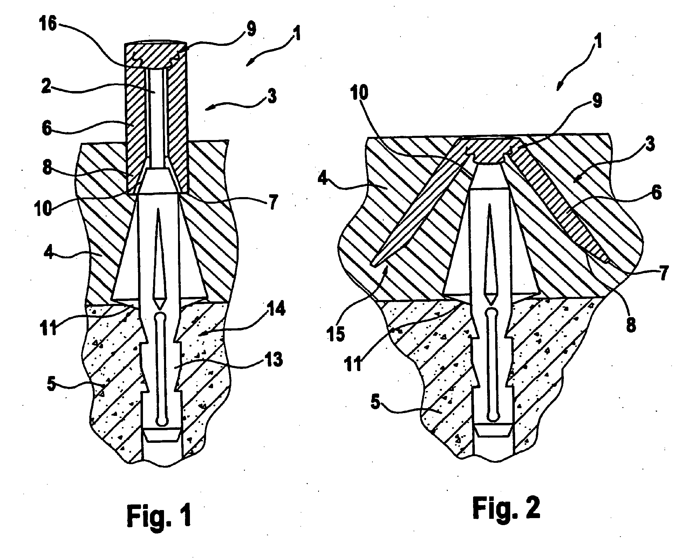

Der in den Figuren 1-4 dargestellte, erfindungsgemäße Dämmstoffhalter 1 dient zum Anbringen von Dämmstoffplatten 4 an einem tragenden Untergrund 5, insbesondere einer Wand oder einer Decke eines nicht dargestellten Gebäudes. Der Dämmstoffhalter 1 ist zum Versenken in der Dämmstoffplatte 4 vorgesehen. Der in den Figuren 1, 2 dargestellte Dämmstoffhalter 1 weist einen die Dämmstoffplatte 4 durchsetzenden, zylindrischen Halterschaft 2 und einen daran anschließenden Halterteller 3 auf. Das dem Halterteller 3 gegenüberliegende Ende des Halterschaftes 2 greift in einen Dübelschaft 13 eines Dübels 14 ein. Der Dübel 14 ist im Untergrund 5 verankert. Der Halterteller 3 wird durch Abstützelemente 6 gebildet, die mit einem hinteren Ende des Halterschaftes 2 schwenkbar verbunden sind. Die Abstützelemente 6 des Haltertellers 3 sind aus einer Montagestellung (dargestellt in Figur 1) in eine Haltestellung (dargestellt in Figur 2) schwenkbar. In der Montagestellung weisen die Abstützelemente 6 in Richtung des Untergrundes 5 und sind parallel zur Längsachse des Halterschaftes 2 ausgerichtet. Ein vorderes Ende der Abstützelemente 6 ist als Schneide 7 ausgebildet. Die Schneide 7 schneidet beim Einbringen des Haltertellers 3 in die Dämmstoffplatte 4 in die Dämmstoffplatte 4 ein. Beim Versenken des Haltertellers 3 in die Dämmstoffplatte 4 dringen die Abstützelemente 6 in die Einschnitte der Dämmstoffplatte 4 ein und gehen eine formschlüssige Verbindung mit der Dämmstoffplatte 4 ein. Die Verschwenkung der Abstützelemente 6 von der Montagestellung in die Haltestellung erfolgt durch Zwangsspreizung mittels den an den Abstützelementen 6 angeordneten Spreizelementen 8. Die Spreizelemente 8 werden durch schräg nach außen geneigte Anlageflächen 15 des Haltertellers 3 gebildet. Die Anlageflächen 15 gleiten zu Beginn des Schwenkvorgangs auf Gleitflächen 10 des Dübels 14 und stützen sich beim weiteren Ausschwenken auf nicht dargestellten Schnittflächen der Dämmstoffplatte 4 ab. Zur lagegenauen Positionierung des Dämmstoffhalters 1 liegt ein Bund 16 des Halterschaftes 2 an der zum hinteren Ende des Dämmstoffhalters 1 weisenden Stirnfläche des Dübels 14 an, wobei sich der Dübel 14 mit einem Widerlager 11 gegen den Untergrund 5 abstützt. Beim Einbringen des Dämmstoffhalters 1 in die Dämmstoffplatte 4 wirkt ein nach außen gerichtetes Moment auf die Abstützelemente 6 des Haltertellers 3 ein und verschwenkt die Abstützelemente 6 von der Montagestellung in die Haltestellung. In der Haltestellung stehen die Abstützelemente 6 seitlich vom Halterschaft 2 ab und fixieren die Dämmstoffplatte 4 am Untergrund 5. Die Haltestellung des Haltertellers 3 wird durch Sicherungselemente in Form von Anschlägen 9 am hinteren Ende des Halterschaftes 3 festgelegt. Die Abstützelemente 6 des Haltertellers 3 können solange verschwenkt werden, bis die Abstützelemente 6 an den Anschlägen 9 des Dämmstoffhalters 1 anliegen. Die Anschläge 9 verhindern ein Verschwenken des Haltertellers 3 über die Haltestellung hinaus.

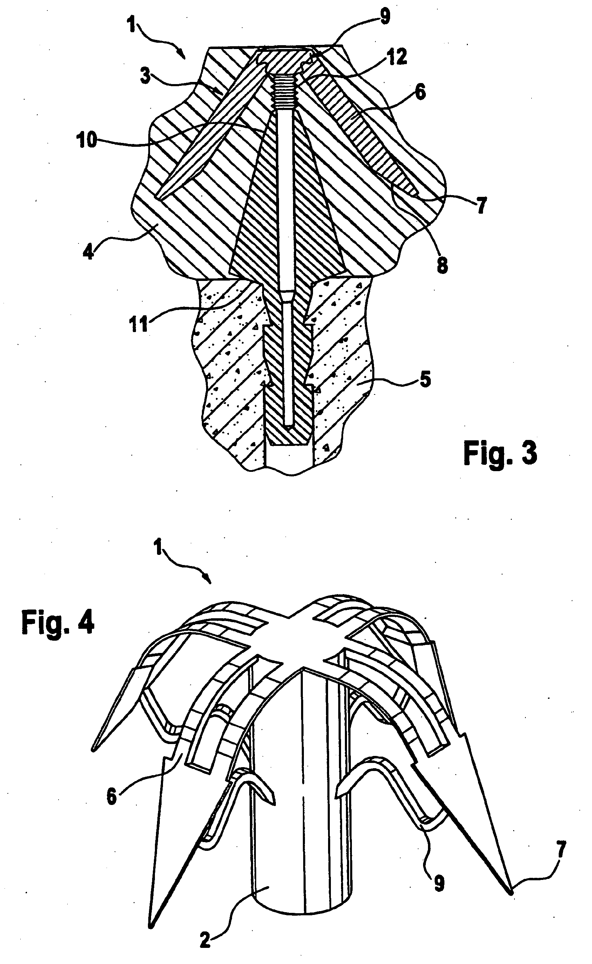

Figur 3 zeigt eine einstückige Version des in den Figuren 1, 2 dargestellten erfindungsgemäßen Dämmstoffhalters 1. Der Halterschaft 13 des Dämmstoffhalters 1 ist mit dem Dübel 14 einstückig ausgeführt. An einem hinteren Ende des Halterschaftes 13 weist der Dämmstoffhalter 1 eine zwischen den Abstützelementen 6 und dem Dübel 14 angeordnete Stauchzone 12 auf. Das Schwenken der Abstützelemente 6 von der Montagestellung in die Haltestellung erfolgt durch Stauchen der Stauchzone 12 des Dämmstoffhalters 1. Zum Stauchen des Dämmstoffhalters 1 stützt sich der Dübel 14 mit seinem Widerlager 11 am Untergrund 5 ab. Das Verschwenken der Abstützelemente 6 erfolgt in derselben Weise, wie bei der in den Figuren 1, 2 beschriebenen Ausführung.

Figur 4 zeigt eine Ausführungsform des erfindungsgemäßen Dämmstoffhalters 1, bei der vier Abstützelemente 6 um 90° zueinander versetzt am einem hinteren Ende des Halterschaftes 2 des Dämmstoffhalters 1 angeordnet sind. Die Abstützelemente 6 sind an den Halterschaft 2 angeformt und starr mit dem Halterschaft 2 verbunden. Die Abstützelemente 6 weisen an ihren freien Enden Spitzen 7 zum Einschneiden einer nicht dargestellten Dämmstoffplatte auf. Die Abstützelemente 6 des Dämmstoffhalters 1 sind biegeelastisch ausgeführt und in Richtung eines freien Endes des Halterschaftes 2 gebogen, wobei die Spitzen 7 seitlich nach außen weisen. Die Abstützelemente 6 sind durch Biegen der Abstützelemente 6 nach außen verschwenkbar. Die Spitzen 7 der Abstützelemente 6 sind über Sicherungselemente, die als wellenförmige Sicherungsstreben 9 ausgeführt sind, mit dem Halterschaft 2 verbunden. Beim Verschwenken der Abstützelemente 6 in die Haltestellung werden die Sicherungsstreben 9 gestreckt und verhindern ein Verschwenken der Abstützelemente 6 über die Haltestellung hinaus. Das Verschwenken der Abstützelemente 6 erfolgt in ähnlicher Weise wie bei den vorangehend beschriebenen Ausführungsbeispielen.

## Patentansprüche

1. Dämmstoffhalter (1) zum Anbringen von Dämmstoffplatten (4) an einem tragenden Untergrund (5), mit einem die Dämmstoffplatte (4) durchsetzenden Halterschaft (2) und einem daran anschließenden Halterteller (3), wobei der Halterteller (3) durch Abstützelemente (6) gebildet wird, die mit einem hinteren Ende des Halterschaftes (2) schwenkbar verbunden sind und an ihren Stirnflächen Schneidvorrichtungen (7) zum Einscheiden der Dämmstoffplatte (4) beim Einbringen des Haltertellers (3) in die Dämmstoffplatte (4) aufweisen **dadurch gekennzeichnet, dass** der Halterschaft (2) in einen Dübelschaft (13) eines Dübels (14) eingreift.

2. Dämmstoffhalter nach Anspruch 1, **dadurch gekennzeichnet, dass** der Dämmstoffhalter (1) ein Widerlager (11) für den Untergrund (5) aufweist.

3. Dämmstoffhalter nach Anspruch 1 oder 2, **dadurch gekennzeichnet, dass** der Dämmstoffhalter (1) Spreizelemente (8) zur Zwangsspreizung des Haltertellers (3) beim Einbringen des Haltertellers (3) in die Dämmstoffplatte (4) aufweist.

4. Dämmstoffhalter nach Anspruch 1 oder 2, **dadurch gekennzeichnet, dass** die Abstützelemente (6) des Haltertellers (3) aus einer Montagestellung in eine Haltestellung verschwenkbar sind, wobei in der Montagestellung die Abstützelemente (6) in Richtung eines vorderen Endes des Halterschaftes (2) weisen und in der Haltestellung seitlich vom Halterschaft (2) abstehen.

5. Dämmstoffhalter nach Anspruch 1 oder 2, **dadurch gekennzeichnet, dass** die Abstützelemente (6) in der Haltestellung in einen inneren Bereich einer Dämmstoffplatte (4) zumindest teilweise eingreifen.

6. Dämmstoffhalter nach Anspruch 4, **dadurch gekennzeichnet, dass** der Dämmstoffhalter (1) Sicherungselemente (9) für den Halterteller (3) aufweist, die die Haltestellung der Abstützelemente (6) festlegen und ein Verschwenken der Abstützelemente (6) über die Haltestellung hinaus verhindern.

7. Dämmstoffhalter nach Anspruch 3, **dadurch gekennzeichnet, dass** die Spreizelemente (8) von zu einer Mittelachse des Halterschaftes (2) schräg nach außen geneigten Anlageflächen (15) der Abstützelemente (6) gebildet werden, die beim Einbringen des Haltertellers (3) in eine Dämmstoffplatte (4) ein nach außen gerichtetes Moment auf die Abstützelemente (6) bewirken und **dadurch** die Abstützelemente (6) von der Montagestellung in die Haltestellung verschwenken.

8. Dämmstoffhalter nach Anspruch 7, **dadurch gekennzeichnet, dass** der Dämmstoffhalter (1) schräg nach außen geneigte Gleitflächen (10) für die Anlageflächen (15) der Spreizelemente (8) der Abstützelemente (6) aufweist, die beim Einbringen des Haltertellers (3) in eine Dämmstoffplatte (4) ein nach außen gerichtetes Moment auf die Abstützelemente (6) bewirken und **dadurch** die Abstützelemente (6) von der Montagestellung in die Haltestellung verschwenken.

9. Dämmstoffhalter nach Anspruch 7, **dadurch gekennzeichnet, dass** der Dämmstoffhalter (1) einstückig ausgeführt ist und eine Stauchzone (12) an einem hinteren Ende des Halterschaftes (2) unterhalb der Abstützelemente (6) aufweist, und das Verschwenken der Abstützelemente (6) von der Montagestellung in die Haltestellung durch Stauchen der Stauchzone (12) des Dämmstoffhalters (1) erfolgt.

10. Dämmstoffhalter (1) zum Anbringen von Dämmstoffplatten (4) an einem tragenden Untergrund (5), mit einem die Dämmstoffplatte (4) durchsetzenden Halterschaft (2) und einem daran anschließenden Halterteller (3), wobei der Halterteller (3) durch Abstützelemente (6) gebildet wird, die mit einem hinteren Ende des Halterschaftes (2) schwenkbar verbunden sind und an ihren Stirnflächen Schneidvorrichtungen (7) zum Einscheiden der Dämmstoffplatte (4) beim Einbringen des Haltertellers (3) in die Dämmstoffplatte (4) aufweisen, wobei die Abstützelemente (6) des Haltertellers (3) aus einer Montagestellung in eine Haltestellung verschwenkbar sind, in der Montagestellung die Abstützelemente . (6) in Richtung eines vorderen Endes des Halterschaftes (2) weisen und in der Haltestellung seitlich vom Halterschaft (2) abstehen **dadurch gekennzeichnet, dass** der Dämmstoffhalter (1) Sicherungselemente (9) für den Halterteller (3) aufweist, die die Haltestellung der Abstützelemente (6) festlegen und ein Verschwenken der Abstützelemente (6) über die Haltestellung hinaus verhindern.

11. Dämmstoffhalter nach Anspruch 10, **dadurch gekennzeichnet, dass** der Dämmstoffhalter (1) Spreizelemente (8) zur Zwangsspreizung des Haltertellers (3) beim Einbringen des Haftertellers (3) in die Dämmstoffplatte (4) aufweist.

12. Dämmstoffhalter nach Anspruch 10, **dadurch gekenntzeichnet,** dass die Abstützelemente (6) in der Haltestellung in einen inneren Bereich einer Dämmstoffplatte (4) zumindest teilweise eingreifen.

13. Dämmstoffhalter nach Anspruch 11, **dadurch gekennzeichnet, dass** die Spreizelemente (8) von zu einer Mittelachse des Halterschaftes (2) schräg nach außen geneigten Anlageflächen (15) der Abstützelemente (6) gebildet werden, die beim Einbringen des Haltertellers (3) in eine Dämmstoffplatte (4) ein nach außen gerichtetes Moment auf die Abstützelemente (6) bewirken und **dadurch** die Abstützelemente (6) von der Montagestellung in die Haltestellung verschwenken.

14. Dämmstoffhalter nach Anspruch 13, **dadurch gekennzeichnet, dass** der Dämmstoffhalter (1) schräg nach außen geneigte Gleitflächen (10) für die Anlageflächen (15) der Spreizelemente (8) der Abstützelemente (6) aufweist, die beim Einbringen des Haltertellers (3) in eine Dämmstoffplatte (4) ein nach außen gerichtetes Moment auf die Abstützelemente (6) bewirken und **dadurch** die Abstützelemente (6) von der Montagestellung in die Haltestellung verschwenken.

15. Dämmstoffhalter nach Anspruch 13, **dadurch gekennzeichnet, dass** der Dämmstoffhalter (1) einstückig ausgeführt ist und eine Stauchzone (12) an einem hinteren Ende des Halterschaftes (2) unterhalb der Abstützelemente (6) aufweist, und das Verschwenken der Abstützelemente (6) von der Montagestellung in die Haltestellung durch Stauchen der Stauchzone (12) des Dämmstoffhalters (1) erfolgt.

## Claims

1. Insulation holder (1) for attaching insulation panels (4) to a supporting substrate (5), having a holder shank (2), which passes through the insulation panel (4), and an adjoining holder plate (3), the holder plate (3) being formed by support elements (6) which are pivotally connected to the rear end of the holder shank (2) and have, on their end faces, cutting devices (7) for cutting into the insulation panel (4) on introduction of the holder plate (3) into the insulation panel (4), **characterized in that** the holder shank (2) engages in a fixing plug shank (13) of a fixing plug (14).

2. Insulation holder according to claim 1, **characterized in that** the insulation holder (1) has a counter-bearing (11) for the substrate (5).

3. Insulation holder according to claim 1 or 2, **characterized in that** the insulation holder (1) has expander elements (8) for forced expansion of the holder plate (3) on introduction of the holder plate (3) into the insulation panel (4).

4. Insulation holder according to claim 1 or 2, **characterized in that** the support elements (6) of the holder plate (3) are pivotable from an installation position into a holding position, wherein in the installation position the support elements (6) point in the direction of the forward end of the holder shank (2) and in the holding position project laterally from the holder shank (2).

5. Insulation holder according to claim 1 or 2, **characterized in that** the support elements (6) in the holding position engage at least partly in an inner region of an insulation panel (4).

6. Insulation holder according to claim 4, **characterized in that** the insulation holder (1) has securing elements (9) for the holder plate (3) which fix the holding position of the support elements (6) and prevent the support elements (6) from pivoting beyond the holding position.

7. Insulation holder according to claim 3, **characterized in that** the expander elements (8) are formed by contact faces (15) of the support elements (6) inclined obliquely outwards relative to the centre axis of the holder shank (2), which contact faces, on introduction of the holder plate (3) into an insulation panel (4), bring about an outwardly directed moment on the support elements (6) and thus pivot the support elements (6) from the installation position into the holding position.

8. Insulation holder according to claim 7, **characterized in that** the insulation holder (1) has obliquely outwardly inclined slide faces (10) for the contact faces (15) of the expander elements (8) of the support elements (6) which, on introduction of the holder plate (3) into an insulation panel (4), bring about an outwardly directed moment on the support elements (6) and thus pivot the support elements (6) from the installation position into the holding position.

9. Insulation holder according to claim 7, **characterized in that** the insulation holder (1) is of one-piece construction and has a buckling zone (12) on the rear end of the holder shank (2) below the support elements (6), and the pivoting of the support elements (6) from the installation position into the holding position is effected by buckling of the buckling zone (12) of the insulation holder (1).

10. Insulation holder (1) for attaching insulation panels (4) to a supporting substrate (5), having a holder shank (2), which passes through the insulation panel (4), and an adjoining holder plate (3), the holder plate (3) being formed by support elements (6) which are pivotally connected to the rear end of the holder shank (2) and have, on their end faces, cutting devices (7) for cutting into the insulation panel (4) on introduction of the holder plate (3) into the insulation panel (4), the support elements (6) of the holder plate (3) being pivotable from an installation position into a holding position, the support elements (6) pointing in the direction of the forward end of the holder shank (2) in the installation position and projecting laterally from the holder shank (2) in the holding position, **characterized in that** the insulation holder (1) has securing elements (9) for the holder plate (3) which fix the holding position of the support elements (6) and prevent the support elements (6) from pivoting beyond the holding position.

11. Insulation holder according to claim 10, **characterized in that** the insulation holder (1) has expander elements (8) for forced expansion of the holder plate (3) on introduction of the holder plate (3) into the insulation panel (4).

12. Insulation holder according to claim 10, **characterized in that** the support elements (6) in the holding position engage at least partly in an inner region of an insulation panel (4).

13. Insulation holder according to claim 11, **characterized in that** the expander elements (8) are formed by contact faces (15) of the support elements (6) inclined obliquely outwards relative to the centre axis of the holder shank (2), which contact faces, on introduction of the holder plate (3) into an insulation panel (4), bring about an outwardly directed moment on the support elements (6) and thus pivot the support elements (6) from the installation position into the holding position.

14. Insulation holder according to claim 13, **characterized in that** the insulation holder (1) has obliquely outwardly inclined slide faces (10) for the contact faces (15) of the expander elements (8) of the support elements (6) which, on introduction of the holder plate (3) into an insulation panel (4), bring about an outwardly directed moment on the support elements (6) and thus pivot the support elements (6) from the installation position into the holding position.

15. Insulation holder according to claim 13, **characterized in that** the insulation holder (1) is of one-piece construction and has a buckling zone (12) on the rear end of the holder shank (2) below the support elements (6), and the pivoting of the support elements (6) from the installation position into the holding position is effected by buckling of the buckling zone (12) of the insulation holder (1).

## Revendications

1. Fixation (1) pour matériau isolant, pour installer des panneaux isolants (4) sur un fond porteur (5), avec une tige de fixation (2) traversant le panneau isolant (4) et un plateau de fixation (3) faisant suite à la tige, sachant que le plateau de fixation (3) est formé par des éléments de soutien (6) qui sont reliés à pivotement à une extrémité arrière de la tige de fixation (2) et qui présentent sur leurs faces frontales des dispositifs de coupe (7) pour entailler le panneau isolant (4) lors de l'introduction du plateau de fixation (3) dans le panneau isolant (4), **caractérisée en ce que** la tige de fixation (2) s'engage dans une tige de cheville (13) d'une cheville (14).

2. Fixation pour matériau isolant selon la revendication 1, **caractérisée en ce que** la fixation (1) pour matériau isolant présente un contre-appui (11) pour le fond (5).

3. Fixation pour matériau isolant selon la revendication 1 ou 2, **caractérisée en ce que** la fixation (1) pour matériau isolant présente des éléments écarteurs (8) pour l'écartement forcé du plateau de fixation (3) lors de l'introduction du plateau de fixation (3) dans le panneau isolant (4).

4. Fixation pour matériau isolant selon la revendication 1 ou 2, **caractérisée en ce que** les éléments de soutien (6) du plateau de fixation (3) peuvent être pivotés d'une position de montage dans une position de fixation, sachant que les éléments de soutien (6) sont dirigés vers l'extrémité avant de la tige de fixation (2) dans la position de montage, et font saillie sur les côtés de la tige de fixation (2) dans la position de fixation.

5. Fixation pour matériau isolant selon la revendication 1 ou 2, **caractérisée en ce que** les éléments de soutien (6), dans la position de fixation, s'engagent au moins partiellement dans une région intérieure d'un panneau isolant (4).

6. Fixation pour matériau isolant selon la revendication 4, **caractérisée en ce que** la fixation (1) pour matériau isolant présente des éléments de blocage (9) pour le plateau de fixation (3), qui bloquent la position de fixation des éléments de soutien (6) et empêchent un pivotement des éléments de soutien (6) au-delà de la position de fixation.

7. Fixation pour matériau isolant selon la revendication 3, **caractérisée en ce que** les éléments écarteurs (8) sont forgés par des faces d'application (15) des éléments de soutien (6) qui sont inclinées en biais vers l'extérieur par rapport à un axe médian de la tige de fixation (2) et qui, lors de l'introduction du plateau de fixation (3) dans un panneau isolant (4), produisent sur les éléments de soutien (6) un couple dirigé vers l'extérieur et font ainsi pivoter les éléments de soutien (6) de la position de montage dans la position de fixation.

8. Fixation pour matériau isolant selon la revendication 7, **caractérisée en ce que** la fixation (1) pour matériau isolant présente des faces de glissement (10) inclinées en biais vers l'extérieur pour les faces d'application (15) des éléments écarteurs (8) des éléments de soutien (6), qui lors de l'introduction du plateau de fixation (3) dans un panneau isolant (4) produisent sur les éléments de soutien (6) un couple dirigé vers l'extérieur et font ainsi pivoter les éléments de soutien (6) de la position de montage dans la position de fixation.

9. Fixation pour matériau isolant selon la revendication 7, **caractérisée en ce que** la fixation (1) pour matériau isolant est réalisée d'un seul tenant et présente une zone de compression (12) à une extrémité arrière de la tige de fixation (2) en dessous des éléments de soutien (6), et le pivotement des éléments de soutien (6) de la position de montage dans la position de fixation s'effectue par compression de la zone de compression (12) de la fixation (1) pour matériau isolant.

10. Fixation (1) pour matériau isolant, pour installer des panneaux isolants (4) sur un fond porteur (5), avec une tige de fixation (2) traversant le panneau isolant (4) et un plateau de fixation (3) faisant suite à la tige, sachant que le plateau de fixation (3) est formé par des éléments de soutien (6) qui sont reliés à pivotement à une extrémité arrière de la tige de fixation (2) et qui présentent sur leurs faces frontales des dispositifs de coupe (7) pour entailler le panneau isolant (4) lors de l'introduction du plateau de fixation (3) dans le panneau isolant (4), sachant que les éléments de soutien (6) du plateau de fixation (3) peuvent être pivotés d'une position de montage dans une position de fixation, et que les éléments de soutien (6) sont dirigés vers l'extrémité avant de la tige de fixation (2) dans la position de montage et font saillie sur les côtés de la tige de fixation (2) dans la position de fixation, **caractérisée en ce que** la fixation (1) pour matériau isolant présente des éléments de blocage (9) pour le plateau de fixation (3), qui bloquent la position de fixation des éléments de soutien (6) et empêchent un pivotement des éléments de soutien (6) au-delà de la position de fixation.

11. Fixation pour matériau isolant selon la revendication 10, **caractérisée en ce que** la fixation (1) pour matériau isolant présente des éléments écarteurs (8) pour l'écartement forcé du plateau de fixation (3) lors de l'introduction du plateau de fixation (3) dans le panneau isolant (4).

12. Fixation pour matériau isolant selon la revendication 10, **caractérisée en ce que** les éléments de soutien (6), dans la position de fixation, s'engagent au moins partiellement dans une région intérieure d'un panneau isolant (4).

13. Fixation pour matériau isolant selon la revendication 11, **caractérisée en ce que** les éléments écarteurs (8) sont formés par des faces d'application (15) des éléments de soutien (6) qui sont inclinées en biais vers l'extérieur par rapport à un axe médian de la tige de fixation (2) et qui, lors de l'introduction du plateau de fixation (3) dans un panneau isolant (4), produisent sur les éléments de soutien (6) un couple dirigé vers l'extérieur et font ainsi pivoter les éléments de soutien (6) de la position de montage dans la position de fixation.

14. Fixation pour matériau isolant selon la revendication 13, **caractérisée en ce que** la fixation (1) pour matériau isolant présente des faces de glissement (10) inclinées en biais vers l'extérieur pour les faces d'application (15) des éléments écarteurs (8) des éléments de soutien (6), qui lors de l'introduction du plateau de fixation (3) dans un panneau isolant (4) produisent sur les éléments de soutien (6) un couple dirigé vers l'extérieur et font ainsi pivoter les éléments de soutien (6) de la position de montage dans la position de fixation.

15. Fixation pour matériau isolant selon la revendication 13, **caractérisée en ce que** la fixation (1) pour matériau isolant est réalisée d'un seul tenant et présente une zone de compression (12) à une extrémité arrière de la tige de fixation (2) en dessous des éléments de soutien (6), et le pivotement des éléments de soutien (6) de la position de montage dans la position de fixation s'effectue par compression de la zone de compression (12) de la fixation (1) pour matériau isolant.
